(19) Europäisches Patentamt
European Patent Office
Office européen des brevets

(11) EP 4 782 403 A1

(12) EUROPEAN PATENT APPLICATION
published in accordance with Art. 153(4) EPC

(43) Date of publication:
29.07.2026 Bulletin 2026/31

(51) International Patent Classification (IPC):
$C01B\ 33/18^{(2006.01)}$

(21) Application number: 24868046.4

(52) Cooperative Patent Classification (CPC):
C01B 33/18

(22) Date of filing: 27.08.2024

(86) International application number:
PCT/JP2024/030461

(87) International publication number:
WO 2025/062966 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.09.2023 JP 2023151536

(71) Applicant: Fuso Chemical Co., Ltd.
Osaka-shi, Osaka 541-0041 (JP)

(72) Inventors:
• MIKI, Kazumi
  Osaka-shi, Osaka 541-0041 (JP)
• KATO, Satomi
  Osaka-shi, Osaka 541-0041 (JP)
• HIRANO, Yoshihiro
  Osaka-shi, Osaka 541-0041 (JP)
• OMOKAWA, Kazui
  Osaka-shi, Osaka 541-0041 (JP)

(74) Representative: Müller-Boré & Partner
Patentanwälte PartG mbB
Friedenheimer Brücke 21
80639 München (DE)

(54) **METAL OXIDE PARTICLES AND METHOD FOR PRODUCING SAME**

(57) The present invention provides metal oxide particles with a narrow particle size distribution, a spherical shape, and less cracking, and a method for producing the same. The present invention provides metal oxide particles having a ratio (Sa/Sb) of 1.0 to 2.0, where Sa ($m^2/g$) is the specific surface area of the metal oxide particles measured by the BET method, and Sb ($m^2/g$) is the specific surface area of the metal oxide particles calculated from SEM minor axis d1 (um) and true density pa ($g/cm^3$).

Fig. 1

EP 4 782 403 A1

## Description

Technical Field

The present invention relates to metal oxide particles and a method for producing the same.

Background Art

In recent years, research has been conducted on metal oxide fine particles. When metal oxides are reduced to submicron sizes, their properties change, and their electrical, optical, and thermal properties also change significantly. Therefore, they have the potential to be used as new highly functional materials.

Metal oxide fine particles have a dense, porous, or hollow structure. Among these, hollow metal oxide particles have attracted attention as a novel highly functional material due to their low density. For example, fillers with excellent dielectric properties and dispersibility are required as additives for electrically insulating encapsulants.

As methods for producing hollow metal oxide particles, the following methods have been proposed: a method for producing hollow particles by spraying silica gel powder into a flame (see PTL 1), a method for producing hollow particles using an emulsion template method (see PTL 2), a method for producing fine hollow particles by using a specific organic compound as a core in an emulsion template method (see PTL 3), a method for producing hollow particles by an inorganic template method (see PTL 4), and a method for producing hollow particles by a polymer template method (see PTL 5).

However, in the production methods described in these patent literatures, no consideration has been given to preventing cracking of the metal oxide particles produced. If there are many cracks in metal oxide particles, the specific surface area increases, and the amount of moisture adsorbed increases. For example, when metal oxide particles are used as an additive for electrically insulating encapsulants, the dielectric tangent increases, which adversely affects the properties of the metal oxide.

In addition, these patent literatures do not discuss the particle size distribution and shape of metal oxide particles. If metal oxide particles have a wide particle size distribution and irregular shapes, it is difficult for them to exhibit characteristics as a novel highly functional material. For example, there is a problem that a filler with excellent dielectric properties and dispersibility cannot be obtained as an additive for electrically insulating encapsulants.

Furthermore, PTL 5 states that coating polymethyl methacrylate particles with methyltrimethoxysilane and firing them can prevent cracking when the particles are added to resins. However, PTL 5 does not mention dispersibility, nor does it mention particle density or specific surface area. There is a possibility that the penetration of water vapor and resin components into the particles is not sufficiently prevented, resulting in the problem of not being able to prevent cracking.

Accordingly, there is a demand for the development of metal oxide particles that have a narrow particle size distribution, are spherical, and are prevented from cracking, as well as a method for producing the same.

Citation List

Patent Literature

PTL 1: WO2007-125891
PTL 2: WO2021-172294
PTL 3: JP2012-136363A
PTL 4: JP2022-172938A
PTL 5: JP2022-019357A

Summary of Invention

Technical Problem

An object of the present invention is to provide metal oxide particles with a narrow particle size distribution, a spherical shape, and less cracking, and a method for producing the same.

Solution to Problem

As a result of extensive study, the present inventors found that the above object can be achieved by metal oxide particles having a ratio (Sa/Sb) of 1.0 to 2.0, where Sa ($m^2$/g) is the specific surface area of the metal oxide particles measured by the BET method, and Sb ($m^2$/g) is the specific surface area of the metal oxide particles calculated from SEM minor axis d1 ($\mu$m) and true density pa (g/$cm^3$). Thus, the present invention has been completed.

Specifically, the present invention relates to the following metal oxide particles and method for producing the same.

1. Metal oxide particles having a ratio (Sa/Sb) of 1.0 to 2.0, where Sa ($m^2$/g) is the specific surface area of the metal oxide particles measured by the BET method, and Sb ($m^2$/g) is the specific surface area of the metal oxide particles calculated from SEM minor axis d1 ($\mu$m) and true density pa (g/$cm^3$).

2. The metal oxide particles according to Item 1, which have a ratio (pa/pb) of 0.20 to 0.55, where pa is the true density of the metal oxide particles, and pb is the true density of metal oxide that forms the metal oxide particles.

3. The metal oxide particles according to Item 1 or 2, which have a ratio D90/D10 of 1.0 or more and 1.3 or less, where D10 is a particle size at 10% or more from the smallest SEM minor axis d1 of the metal oxide particles, and D90 is a particle size at 10% or less from the largest SEM minor axis d1.

4. The metal oxide particles according to any one of Items 1 to 3, wherein the metal oxide that forms the metal oxide particles is amorphous silica.

5. A method for producing metal oxide particles, comprising step 1 of carbonizing metal oxide precursor particles, and step 2 of firing the metal oxide precursor particles to produce metal oxide particles,

wherein the metal oxide particles have a ratio (Sa/Sb) of 1.0 to 2.0, where Sa ($m^2$/g) is the specific surface area of the metal oxide particles measured by the BET method, and Sb ($m^2$/g) is the specific surface area of the metal oxide particles calculated from SEM minor axis d1 ($\mu$m) and true density pa (g/$cm^3$).

Advantageous Effects of Invention

The metal oxide particles of the present invention have a narrow particle size distribution, are spherical, and are prevented from cracking. The metal oxide particles of the present invention can be effectively used as a highly functional material, and can be used as a filler with excellent dielectric properties and dispersibility as an additive for electrically insulating encapsulants. In addition, the method for producing metal oxide particles of the present invention can produce metal oxide particles that have a narrow particle size distribution, are spherical, and are prevented from cracking.

Brief Description of Drawings

Fig. 1 shows an SEM image of the metal oxide particles of Example 1.
Fig. 2 shows an SEM image of the metal oxide particles of Comparative Example 1.
Fig. 3 shows an SEM image of the metal oxide particles of Comparative Example 2.

Description of Embodiments

The present invention will be described in detail below.

Herein, the terms "include" and "contain," and their variations express concepts that encompass comprising, consisting essentially of, and consisting of.

Herein, when a numerical range is expressed as "A to B," the expression means A or more and B or less.

Herein, "part(s)" and "%" indicate part(s) by mass and mass% (wt%), respectively, unless otherwise specified.

1. Metal Oxide Particles

The metal oxide particles of the present invention are characterized in that they have a ratio (Sa/Sb) of 1.0 to 2.0, where Sa ($m^2$/g) is the specific surface area of the metal oxide particles measured by the BET method, and Sb ($m^2$/g) is the specific surface area of the metal oxide particles calculated from SEM minor axis d1 ($\mu$m) and true density pa (g/$cm^3$). Since the metal oxide particles of the present invention have the above configuration, the metal oxide particles are prevented from cracking, have fewer irregularities and holes, are spherical, and have a narrow particle size distribution. Therefore, the specific surface area Sa of the metal oxide particles measured by the BET method is not too large compared to the specific surface area Sb of the metal oxide particles calculated from SEM minor axis d1 ($\mu$m) and true density pa (g/$cm^3$). Further, since the ratio (Sa/Sb) is 1.0 to 2.0, the metal oxide particles of the present invention can be effectively used as a highly functional material, and can be used as a filler with excellent dielectric properties and dispersibility as an additive for electrically insulating encapsulants.

The metal oxide particles of the present invention will be described in detail below.

The metal oxide that forms the metal oxide particles is not limited, and conventionally known metal oxides can be used. Examples of such metal oxides include silica, amorphous silica, magnesium oxide, zinc oxide, lead oxide, aluminum oxide (alumina), tantalum oxide, indium oxide, bismuth oxide, yttrium oxide, cobalt oxide, copper oxide, manganese oxide, selenium oxide, iron oxide, zirconium oxide, germanium oxide, tin oxide, titanium oxide (titania), niobium oxide, molybdenum oxide, and vanadium oxide. Among these, silica and amorphous silica are preferred, and amorphous silica is more preferred.

These metal oxides may be used alone or in combination of two or more.

The metal oxide particles of the present invention have a ratio (Sa/Sb) of 1.0 to 2.0, where Sa ($m^2/g$) is the specific surface area of the metal oxide particles measured by the BET method, and Sb ($m^2/g$) is the specific surface area of the metal oxide particles calculated from SEM minor axis d1 ($\mu$m) and true density pa ($g/cm^3$). The desired shape of the metal oxide particles of the present invention is spherical, and more preferably a perfect sphere, and the specific surface area ratio Sa/Sb is 1.0. Such metal oxide particles have a small surface area relative to their volume, which reduces the interface with the resin, minimizing the increase in viscosity due to the addition of the metal oxide particles. In addition, the small surface area minimizes water adsorption. Therefore, the upper limit of Sa/Sb is 2.0, preferably 1.9 or less, more preferably 1.8 or less, and even more preferably 1.7 or less. However, there is a risk that the yield may decrease when producing ideal particles with an Sa/Sb ratio of 1.0. From such a viewpoint, the lower limit of Sa/Sb is preferably 1.1 or more, more preferably 1.2 or more, and even more preferably 1.3 or more.

Examples of the method for adjusting Sa/Sb to 1.0 to 2.0 include the following methods (1), (2), and (3). Specific examples include (1) a method of changing the carbonization time in step 1 of the method for producing metal oxide particles described later, (2) a method of changing the carbonization temperature in step 1 of the method for producing metal oxide particles described later, and (3) a method of narrowing the particle size distribution of the particles and making them more spherical. In the case of the method (1), shortening the carbonization time suppresses the formation of carbon films, increasing Sa and also increasing Sa/Sb. On the other hand, lengthening the carbonization time promotes the formation of carbon films, decreasing Sa and also decreasing Sa/Sb to approach about 1. In the case of the method (2), lowering the carbonization temperature suppresses the formation of carbon films, increasing Sa and also increasing Sa/Sb. On the other hand, raising the carbonization temperature promotes the formation of carbon films, decreasing Sa and also decreasing Sa/Sb to approach about 1. In the case of the method (3), the narrower the particle size distribution and the more spherical the particles, the smaller Sa can be, reducing Sa/Sb.

In the metal oxide particles of the present invention, the specific surface area Sa ($m^2/g$) of the metal oxide particles measured by the BET method is preferably 5.0 to 20.0 $m^2/g$, more preferably 6.0 to 19.0 $m^2/g$, and even more preferably 7.0 to 18.0 $m^2/g$. Since Sa is within the above range, it is easier to adjust Sa/Sb to 1.0 to 2.0.

In the present specification, the specific surface area Sa ($m^2/g$) of the metal oxide particles is measured by the BET method, and specifically measured by the method described in the Examples provided later.

The specific surface area Sb ($m^2/g$) of the metal oxide particles of the present invention calculated from SEM minor axis d1 ($\mu$m) and true density pa ($g/cm^3$) is preferably 5.0 to 40 $m^2/g$, more preferably 6.0 to 38 $m^2/g$, and even more preferably 7.0 to 36 $m^2/g$. Since Sb is within the above range, it is easier to adjust Sa/Sb to 1.0 to 2.0.

In the present specification, the specific surface area Sb of the metal oxide particles is calculated from the particle size and true density of the metal oxide particles. In general, particle size measurement methods include a method using a laser diffraction particle size distribution analyzer, and dynamic light scattering methods. However, these measurement methods produce values that reflect aggregated particles and the major axis of the particles. Therefore, the calculated value of the specific surface area is likely to be underestimated, making it difficult to compare it with the value of the specific surface area calculated by the BET method or the like. In the present invention, the particle size of the metal oxide particles is measured using the length of the sides of the circumscribed rectangle, Feret diameter, equivalent circle diameter, equivalent ellipse diameter, cutting length, and the like that are determined by SEM image analysis. In addition, since the specific surface area of nearly spherical particles depends more strongly on the minor axis of the metal oxide particles, the minor axis of the particle size described above is used. For example, a minimum Feret diameter, a minor axis of an equivalent ellipse, or a minimum cutting length is defined as d1. The specific surface area Sb of the metal oxide particles is specifically measured by the method described in the Examples provided later.

The SEM minor axis d1 of the metal oxide particles of the present invention is the minimum cut length of the metal oxide particles determined by SEM image analysis. The SEM minor axis d1 is preferably 0.1 to 3.0 $\mu$m, more preferably 0.2 to 2.0 $\mu$m, and even more preferably 0.3 to 1.0 $\mu$m. Since the SEM minor axis d1 is within the above range, it is easier to adjust Sa/Sb to 1.0 to 2.0.

In the present specification, the SEM minor axis d1 of the metal oxide particles is measured by a measurement method based on SEM image analysis. In general, particle size measurement methods include a method using a laser diffraction particle size distribution analyzer, and dynamic light scattering methods. However, these measurement methods produce measured values that reflect aggregated particles and the major axis of the particles. Therefore, the calculated value of the specific surface area is likely to be underestimated, making it difficult to compare it with the value of the specific surface area calculated by the BET method or the like. In the present specification, the SEM minor axis d1 of the metal oxide particles is specifically measured by the method described in the Examples provided later.

One way to adjust the SEM minor axis d1 of the metal oxide particles is to change the particle size of organic polymer particles that form hollow portions in the method for producing metal oxide particle described later. In the synthesis of the organic polymer particles, the higher the monomer concentration, the larger the SEM minor axis d1. In addition, the SEM minor axis d1 of the particles can also be increased by increasing the shell thickness of core-shell particles.

The true density $\rho a$ of the metal oxide particles of the present invention is preferably 0.4 to 1.5 g/cm$^3$, and more preferably 0.6 to 1.3 g/cm$^3$. Since $\rho a$ is within the above range, it is easier to adjust Sa/Sb to 1.0 to 2.0. When the metal oxide particles of the present invention are hollow particles, the metal oxide particles have air layers inside, so their true density is lower than that of solid particles without air layers.

In the present specification, the true density is specifically measured by the method described in the Examples provided later.

The ratio ($\rho a/\rho b$) of the true density $\rho a$ of the metal oxide particles of the present invention to the true density $\rho b$ of the metal oxide forming the metal oxide particles is preferably 0.70 or less, and more preferably 0.55 or less. When the metal oxide particles of the present invention are hollow particles, the metal oxide particles contain air layers. When the upper limit of $\rho a/\rho b$ are within the above range, the metal oxide particles contain more air layers. In general, the larger the pores contained in metal oxide particles, the lower the dielectric constant and dielectric loss tangent of the particles, making them suitable as low-dielectric materials. Moreover, $\rho a/\rho b$ is preferably 0.20 or more, and more preferably 0.40 or more. When the lower limit of $\rho a/\rho b$ is within the above range, the strength of the metal oxide particles is further improved.

One way to adjust $\rho a/\rho b$ is to change the shell thickness of core-shell particles in the method for producing metal oxide particles described later. Increasing the shell thickness increases $\rho a$ and also increases $\rho a/\rho b$. Conversely, decreasing the shell thickness decreases $\rho a$ and also decreases $\rho a/\rho b$.

It is preferable that the metal oxide particles of the present invention have a narrow particle size distribution. Therefore, in the particle size frequency distribution of the metal oxide particles of the present invention, when a particle size at 10% or more from the smallest particle size is defined as D10, and a particle size at 10% or less from the largest particle size of the metal oxide particles of the present invention is defined as D90, the ratio D90/D10 is preferably 1.3 or less, more preferably 1.2 or less, and even more preferably 1.1 or less. By making such particles, Sa/Sb can be further reduced. The lower limit of D90/D10 is not limited, and may be about 1.0 or more.

One way to reduce D90/D10 is to produce particles using a template method. The template method is a method of obtaining hollow particles by coating core particles made of metal, metal oxide, organic polymer, or the like with metal oxide, and then removing the inner core particles. Use of core particles with a narrow particle size distribution allows the synthesis of metal oxide particles with a narrow particle size distribution. When the core particles are made of metal or metal oxide, it is difficult to completely remove them. Thus, core particles made of an organic polymer are preferred.

The ratio of the SEM minor axis d1 to the SEM major axis d2 (d1/d2) of the metal oxide particles of the present invention is preferably 0.8 or more and 1.0 or less. Since such particles are sufficiently spherical, they can minimize the increase in viscosity when added to resins or solvents. Therefore, the lower limit of d1/d2 is preferably 0.8 or more, more preferably 0.85 or more, and even more preferably 0.9 or more. The upper limit of d1/d2 is less than or equal to the theoretical value of 1.0.

One way to adjust d1/d2 is to prevent the aggregation of organic polymer particles that form hollow portions, and core-shell particles obtained by coating the organic polymer particles with metal oxide in the method for producing metal oxide particles described later. By preventing aggregation, the decrease in d1/d2 can be suppressed.

In the metal oxide particles of the present invention, the concentration (total concentration) of alkali metals and alkaline earth metals M1 (e.g., Li, Na, K, Mg, and Ca) is preferably 100 ppm or less, more preferably 50 ppm or less, even more preferably 30 ppm or less, and particularly preferably 15 ppm or less. Since the upper limit of the concentration of M1 is within the above range, it is possible to prevent the deterioration of the dielectric loss tangent due to the formation of ionic bonds with hydroxyl groups contained in the metal oxide. In addition, since the upper limit of the concentration of M1 is within the above range, the uneven distribution of metals contained in the metal oxide on the particle surface due to elution is prevented, and the decrease in insulation near the interface between the metal oxide particles and the resin, as well as the decrease in strength due to peeling between the metal oxide particles and the resin, are further prevented. Furthermore, the concentration of M1 in the metal oxide particles may be at a level where such metals are not substantially contained; however, to completely remove these metals from the metal oxide particles and their raw materials, repeated purification is required, which reduces productivity. Thus, the lower limit of the concentration of M1 may be 1 ppm or more, 2 ppm or more, or 3 ppm or more.

One way to reduce the alkali metals and alkaline earth metals M1 in the metal oxide is to use raw materials with a low content of M1 during the synthesis of core particles and shells described later. For example, when the shell material is silica, tetraalkoxysilanes may be used as raw materials.

When the metal oxide that forms the metal oxide particles of the present invention is amorphous silica, $\rho b$ is 2.20 g/cm$^3$, as described below. Therefore, $\rho a$ is preferably 1.50 or less, and more preferably 1.20 or less. Further, $\rho a$ is preferably 0.40 or more, and more preferably 0.80 or more. Since $\rho a$ is adjusted within the above range, the metal oxide particles of the present invention can be successfully produced, and the breakage of the shells is further prevented, resulting in silica particles with a lower true density and superior dispersibility.

When the metal oxide that forms the metal oxide particles of the present invention is amorphous silica, the total content of metals M2 (e.g., Li, Na, K, Fe, Al, Ca, Mg, Ti, Ni, Cr, Cu, Zn, Pb, Ag, Co, and Mn) other than silicon in the metal oxide particles is preferably 200 ppm or less, more preferably 150 ppm or less, and even more preferably 100 ppm or less. Since the upper limit of the concentration of M2 is within the above range, it is possible to prevent the deterioration of the dielectric loss tangent due to the formation of ionic bonds with hydroxyl groups contained in the metal oxide. In addition, since the upper limit of the concentration of M2 is within the above range, the uneven distribution of metals contained in the metal oxide on the particle surface due to elution is prevented, and the decrease in insulation near the interface between the metal oxide particles and the resin, as well as the decrease in strength due to peeling between the metal oxide particles and the resin, are further prevented. Furthermore, the concentration of M2 in the metal oxide particles may be at a level where such metals are not substantially contained; this requires advanced purification of raw materials and products, and cleaning of equipment, which reduces production efficiency. Thus, the lower limit of the concentration of M2 may be 10 ppm or more, 20 ppm or more, or 30 ppm or more.

One way to reduce the concentration of M2 in the amorphous silica particles is to use raw materials with a low content of M2 during the synthesis of core particles and shells. Furthermore, when an acidic catalyst is used in the reaction, the metal concentration may increase due to equipment corrosion etc., so the content of metals M2 can be reduced by avoiding the use of an acidic catalyst.

pb is the theoretical true density (literature value) of the metal oxide that forms the metal oxide particles (the metal oxide that forms the shells of core-shell particles). $\rho b$ is a value specific to metal oxide. For example, the pb of amorphous silica is 2.2 $g/cm^3$ (MSDS CAS No.: 60676-86-0). When the metal oxide is titania ($TiO_2$), the pb of rutile titania is 4.3 $g/cm^3$, that of anatase titania is 3.9 $g/cm^3$, and that of brookite titania is 4.1 $g/cm^3$. The pb of alumina is 4.0 $g/cm^3$ (MSDS CAS No.: 1344-28-1).

The metal oxide particles of the present invention are preferably carbonized and fired. Since the metal oxide particles are carbonized and fired, the resulting metal oxide particles have even less cracking.

The metal oxide particles of the present invention may have a dense, porous, or hollow form. The metal oxide particles of the present invention can be effectively used as a highly functional material, and can be used as a filler with excellent dielectric properties and dispersibility as an additive for electrically insulating encapsulants. In this respect, the metal oxide particles of the present invention are preferably hollow particles, and more preferably hollow silica particles of amorphous silica.

When the metal oxide particles of the present invention are irradiated with ultrasound at an output of 10 W for 1 minute in ethanol, the proportion of particles with a volume-based particle size of 1 $\mu$m or more is preferably 10% or less, and more preferably 5% or less, of the total number of particles. Since such metal oxide particles contain few strongly aggregated particles, they can be dispersed with weak force, resulting in better dispersibility when added to resins etc.

## 2. Method for Producing Metal Oxide Particles

The method for producing metal oxide particles of the present invention includes step 1 of carbonizing metal oxide precursor particles, and step 2 of firing the metal oxide precursor particles to produce metal oxide particles, wherein the metal oxide particles have a ratio (Sa/Sb) of 1.0 to 2.0, where Sa ($m^2/g$) is the specific surface area of the metal oxide particles measured by the BET method, and Sb ($m^2/g$) is the specific surface area of the metal oxide particles calculated from SEM minor axis d1 ($\mu$m) and true density pa ($g/cm^3$).

Since the production method of the present invention includes step 1 of carbonizing metal oxide precursor particles, and step 2 of firing the metal oxide precursor particles to produce metal oxide particles, the Sa/Sb ratio of the metal oxide particles can be adjusted to 1.0 to 2.0. Such metal oxide particles have a narrow particle size distribution, are spherical, and are prevented from cracking.

In the production method of the present invention, the metal oxide used to produce metal oxide particles is not limited, and conventionally known metal oxides can be used. Examples of such metal oxides include silica, amorphous silica, magnesium oxide, zinc oxide, lead oxide, aluminum oxide (alumina), tantalum oxide, indium oxide, bismuth oxide, yttrium oxide, cobalt oxide, copper oxide, manganese oxide, selenium oxide, iron oxide, zirconium oxide, germanium oxide, tin oxide, titanium oxide (titania), niobium oxide, molybdenum oxide, and vanadium oxide. Among these, silica and amorphous silica are preferred, and amorphous silica is more preferred.

When the metal oxides are silica and amorphous silica, a method for producing these hollow particles (hereinafter also referred to as "hollow silica particles") will be described below as an example.

The hollow silica particles can be produced by forming core-shell particles including cores consisting of organic polymer particles and shells coating the organic polymer particles, and performing steps 1 and 2 of the present invention using the core-shell particles as oxide precursor particles. That is, the method for producing hollow silica particles may include, before step 1 of the present invention, step i of polymerizing an organic monomer in a solution containing the organic monomer, a polymerization initiator, and a solvent to prepare organic polymer particles, and step ii of adding the organic polymer particles prepared in step i and an organometallic compound to a solvent, stirring the mixture to prepare a solution, and forming core-shell particles including cores consisting of the organic polymer particles and shells coating the organic polymer particles in the solution. The details will be described below.

Step i

Step i is a step of polymerizing an organic monomer in a solution containing the organic monomer, a polymerization initiator, and a solvent to prepare organic polymer particles.

Organic Monomer

Any organic monomer may be used as long as organic polymer particles can be produced. The organic monomer is preferably an organic monomer that can form organic polymer particles that are easily burned off due to thermal decomposition after the shells are formed. Specific examples of such organic monomers include styrene, methyl methacrylate, 2-methylstyrene, divinylbenzene, and butadiene. Preferred among these are organic monomers containing hydrophobic structures that are insoluble in hydrophilic solvents. Specifically, it is preferable to use styrene, methyl methacrylate, 2-methylstyrene, divinylbenzene, or butadiene. These organic monomers may be used alone or in combination of two or more.

In step i, the concentration of the organic monomer in the solution is not limited. The concentration of the organic monomer in the solution is preferably 0.1 mass% to 20 mass%, and more preferably 0.2 mass% to 10 mass%, per 100 mass% of the solution. Since the concentration of the organic monomer is adjusted within the above range, the average particle size and particle size distribution of the metal oxide particles as the final product can be successfully controlled.

Solvent

The solvent used in step i can be water or a hydrophilic solvent.

The hydrophilic solvent is not limited, and usable examples include alcohols, such as methanol, ethanol, n-propanol, isopropanol, ethylene glycol, propylene glycol, and 1,4-butanediol; and ketones, such as acetone and methyl ethyl ketone. It is preferable that the hydrophilic solvent can be easily removed by heating, and examples of such hydrophilic solvents include lower alcohols.

The solvent used in step i is preferably a solvent mixture of water and methanol. Use of a solvent mixture of water and methanol makes it possible to prevent aggregation of the organic polymer particles and further prevent aggregation of core-shell particles to be formed in the subsequent step ii.

The mass ratio of water to methanol (water:methanol) in the solvent mixture is preferably 5:95 to 50:50, more preferably 8:92 to 40:60, and even more preferably 10:90 to 30:70. Since the mass ratio of water to methanol is adjusted within the above range, aggregation of the organic polymer particles can be prevented and aggregation of core-shell particles to be formed in the subsequent step ii can be prevented.

These solvents may be used alone or in combination of two or more.

Polymerization Initiator

In step i, the solution preferably contains a polymerization initiator. The polymerization initiator for use can be an inorganic peroxide, an organic peroxide, an azo compound, or the like, but is preferably an azo compound because reaction control in step i is relatively easy.

The azo compound used as a polymerization initiator is preferably water-soluble. Specific examples include 2,2'-azobis(isobutylamidine) dihydrochloride, 2,2'-azobis[2-(2-imidazolin-2-yl)propane] dihydrochloride, 4,4'-azobis(4-cyanovaleric acid), and 2,2'-azobis[2-methyl-N-(2-hydroxyethyl)propionamide]. Among these, cationic compounds are more preferred, specifically 2,2'-azobis(isobutylamidine) dihydrochloride and 2,2'-azobis[2-(2-imidazolin-2-yl)propane] dihydrochloride.

These polymerization initiators may be used alone or in combination of two or more.

In step i, the concentration of the polymerization initiator in the solution is not limited. The concentration of the polymerization initiator is preferably 0.01 mass% to 1 mass% per 100 mass% of the solution. Since the concentration of the polymerization initiator is adjusted within the above range, the average particle size of the metal oxide particles as the final product can be successfully controlled, and cracking of the metal oxide particles can be prevented.

Dispersant

In step i, a dispersant may be added. Any dispersant may be used as long as it can prevent aggregation of the organic polymer particles and aggregation of core-shell particles to be formed in step ii described later. Specific examples include polyvinylpyrrolidone (PVP), hydroxypropyl cellulose (HPC), polyvinyl alcohol (PVA), polyethylene oxide (PEO), polypropylene glycol (PPG), polypropylene oxide (PPO), collagen, and polysaccharides (gum arabic). Preferred among these are polyvinylpyrrolidone and hydroxypropyl cellulose, which can prevent aggregation more strongly.
These dispersants may be used alone or in combination of two or more.
In step i, the concentration of the dispersant in the solution is not limited as long as it is an amount that can prevent aggregation during synthesis of the organic polymer particles and core-shell particles. The concentration of the dispersant in the solution is preferably 0.01 mass% or more, more preferably 0.05 mass% to 10 mass%, and even more preferably 0.05 mass% to 5 mass%, per 100 mass% of the solution. Since the concentration of the dispersant is adjusted within the above range, aggregation of the organic polymer particles can be further prevented, and aggregation of core-shell particles to be formed in step ii described later can be further prevented.

Polymerization

In step i, an organic monomer is polymerized in a solution containing the organic monomer, a dispersant, and a solvent. The polymerization is preferably carried out by mixing the solution at a predetermined temperature, and heating it with stirring.
The temperature for polymerization of the solution in step i is not limited. The reaction temperature for polymerization is preferably 40 to 90°C, and more preferably 50°C to 80°C. Since the reaction temperature for polymerization is adjusted within the above range, the particle size of the organic polymer particles can be successfully controlled.
The reaction time for polymerization is not limited. The reaction time for polymerization is preferably 1 minute to 12 hours, and more preferably 1 hour to 10 hours. Since the reaction time for polymerization is adjusted within the above range, the polymerization can smoothly proceed.
Organic polymer particles are prepared through polymerization. The average particle size of the organic polymer particles is preferably 0.1 $\mu$m to 2.5 $\mu$m, more preferably 0.2 $\mu$m to 2.0 $\mu$m, and even more preferably 0.3 $\mu$m to 1.5 $\mu$m. Since the average particle size of the organic polymer particles is adjusted within the above range, the average particle size of the core-shell particles to be formed in the subsequent step ii and the average particle size of the metal oxide particles (hollow silica particles) to be formed in the subsequent step 1 can be adjusted to fall within appropriate ranges.
Step i enables successful production of the organic polymer particles.

Step ii

Step ii is a step of adding the organic polymer particles prepared in step i and an organometallic compound to a solvent, stirring the contents to prepare a solution, and forming, in the solution, core-shell particles including cores consisting of the organic polymer particles and shells coating the organic polymer particles.

Solvent

The solvent is not limited, and can be preferably water or a mixture of water and a hydrophilic solvent.
Any hydrophilic solvent can be used as long as it is hydrophilic. Examples include alcohols, such as methanol, ethanol, n-propanol, isopropanol, ethylene glycol, propylene glycol, and 1,4-butanediol; ketones, such as acetone and methyl ethyl ketone; and esters, such as ethyl acetate. Preferred among these are alcohols, and specifically, methanol, ethanol, and isopropanol are more preferred.
The solvent is more preferably the same type of alcohol as the alcohol produced by hydrolysis of a metal alkoxide, because use of such an alcohol facilitates recovery and reuse of the solvent.
These solvents may be used alone or in combination of two or more.
The solvent for use is preferably a solvent mixture of water and a hydrophilic solvent. The mass ratio of the hydrophilic solvent to water in the solvent mixture is not limited. The mass ratio of the hydrophilic solvent to water is preferably 50:50 to 100:0, and more preferably 60:40 to 80:20. Since the mass ratio of the hydrophilic solvent to water in the solvent mixture is adjusted within the above range, the metal oxide can be uniformly coated.

Organic Polymer Particles

The organic polymer particles used in step ii are the organic polymer particles prepared in step i above.

The concentration of the organic polymer particles in the solution is preferably 0.1 mass% to 20 mass%, and more preferably 1 mass% to 10 mass%.

Organometallic Compound

The organometallic compound used in step ii is a metal compound represented by formula (1) or a derivative of the organometallic compound.

$$M(OR^1)_n \qquad (1)$$

In formula (1), M represents a metal, such as silicon, titanium, aluminum, or zirconium, with silicon being preferred. $R^1$ may be the same or different and is an alkyl group, preferably a lower alkyl group having 1 to 8 carbon atoms, more preferably a lower alkyl group having 1 to 4 carbon atoms, and even more preferably a lower alkyl group having 1 or 2 carbon atoms.

The organometallic compound for use is preferably tetramethoxysilane of formula (1) wherein M is silicon and $R^1$ is a methyl group, or tetraethoxysilane of formula (1) wherein $R^1$ is an ethyl group. Use of these organometallic compounds makes it possible to uniformly coat the core particles and obtain shells with few remaining alkoxyl groups or hydroxyl groups produced by hydrolysis.

The organometallic compounds may be used alone or in combination of two or more.

The concentration of the organometallic compound in the solution is preferably 0.01 mass% to 50 mass%, and more preferably 0.01 mass% to 20 mass%. Since the concentration of the organometallic compound is adjusted within the above range, polymer or metal oxide composite particles with less aggregation can be obtained.

Catalyst

In step ii, an acidic catalyst or a basic catalyst may be used as the catalyst. From the viewpoint of reducing the metal concentration, it is preferable that the catalyst does not contain metal components.

The acidic catalyst for use can be an inorganic acid, such as sulfuric acid, hydrochloric acid, or nitric acid; or an organic acid, such as acetic acid, malic acid, or citric acid.

The basic catalyst for use can be a nitrogen-containing organic base catalyst, such as ammonia, ethylenediamine, diethylenetriamine, triethylenetetramine, urea, ethanolamine, tetramethylammonium hydroxide (TMAH), tetramethylguanidine, or a basic amino acid.

In step ii, it is preferable to use a basic catalyst as the catalyst, from the viewpoint of obtaining denser shells. It is more preferable to use ammonia, from the viewpoint of facilitating heating removal.

These catalysts may be used alone or in combination of two or more.

It is preferable that the catalyst used in step ii does not contain metal components.

When a volatile catalyst is used in step ii, the catalyst may be added continuously to maintain the pH of the solution.

The concentration of the catalyst in the solution is preferably 0.1 mass% to 5 mass%, and more preferably 0.5 mass% to 3 mass%.

Production of Core-Shell Particles (Metal Oxide Precursor Particles)

The temperature of the solution in step ii is not limited, and is preferably 0°C to 200°C, and more preferably 5°C to 100°C. Since the temperature of the solution in step ii is adjusted within the above range, it is possible to further prevent the deterioration of the particle shape and aggregation due to, for example, softening of the organic polymer particles.

The stirring time in step ii is not limited. The stirring time in step ii is preferably 1 minute to 1200 minutes, and more preferably 1 minute to 600 minutes. Since the stirring time in step ii is adjusted within the above range, shell formation can proceed more effectively.

In step ii explained above, core-shell particles including cores consisting of the organic polymer particles prepared in step i and shells coating the organic polymer particles are formed in the solution. The core-shell particles are used as metal oxide precursor particles in step 1 of the production method of the present invention described later.

Step 1 (Carbonization)

The method for producing silica particles of the present invention includes step 1 of carbonizing metal oxide precursor particles. The metal oxide precursor particles in step 1 are carbonized in step 1 to form carbon films on the surfaces of the metal oxide precursor particles, protecting the surfaces of the metal oxide precursor particles, whereby sintering of the metal oxide particles can be prevented during firing. This improves the dispersibility of the metal oxide particles after firing, and prevents property deterioration and a decrease in yield due to shell cracking even when the particles are dispersed or classified.

Specific examples of the metal oxide precursor particles include the core-shell particles formed in step ii. The organic components in the core-shell particles formed in step ii are carbonized in step 1, whereby a relatively high heat-resistant coating of carbon or hydrocarbon can be formed on the surface of the silica layer. This prevents bonding between particles that occurs during firing in step 2 described later, thus preventing cracking and deformation. Carbonization also reduces the amount of decomposition gas generated in step 2, preventing the formation of pores in the shells and the rupture of the particles. As a result, an increase in true density can be prevented. Step 1 using core-shell particles will be described below as an example.

Carbonization can be carried out, for example, by heating the metal oxide precursor particles in a low-oxygen-concentration atmosphere. The atmosphere for carbonization is not limited, but may be an inert gas atmosphere, such as Ar, $CO_2$, or $N_2$, or a superheated steam or vacuum atmosphere. The atmosphere for carbonization is preferably $N_2$ or superheated steam, from the viewpoint of relatively low cost.

The carbonization temperature may be any temperature that can carbonize the organic matter and does not deform the shells. For example, the carbonization temperature is preferably 400°C to 1300°C, more preferably 450°C to 1200°C, and even more preferably 500°C to 1100°C.

The lower limit of the carbonization time may be the time required to uniformly and sufficiently carbonize the metal oxide precursor particles. The lower limit of the carbonization time is preferably, for example, 1 hour or more, more preferably 2 hours or more, and even more preferably 3 hours or more. Although carbonization may be carried out for a long period of time, the production efficiency decreases. Therefore, the upper limit of the carbonization time is preferably 12 hours or less, more preferably 10 hours or less, and even more preferably 8 hours or less.

The device used for carbonization may be any device that can create a low-oxygen environment and heat the particles, such as a hot-air-circulation-type inert gas atmosphere device (medium-temperature heating equipment RBA, available from Thermal Co., Ltd.), a gas-heated rotary kiln (available from Takasago Industrial Co., Ltd.), or a batch-type carbonizer (CYT series, available from CYC Co., Ltd.). It is preferable to use a batch-type carbonizer because circulating superheated steam allows for more uniform and efficient carbonization.

In step 1 explained above, the metal oxide precursor particles (core-shell particles) are carbonized. The lower limit of the carbon concentration of the carbonized metal oxide precursor particles is preferably 1 wt% or more, and more preferably 2 wt% or more, from the viewpoint of sufficiently coating the surfaces of the metal oxide particles with the carbon component, and reducing the combustion gas generated in step 2. Further, the upper limit is preferably 20 wt% or less, and more preferably 10 wt% or less.

Step 2 (Firing, Dispersion, and Classification)

Step 2 is a step of firing the metal oxide precursor particles to produce metal oxide particles. In step 2, the organic polymer particles, which are the cores of the core-shell particles, and their carbonized products are removed, leaving the inside of the shells hollow, whereby metal oxide particles that can be used as highly functional materials are produced. The metal oxide particles produced through steps 1 and 2 have a narrow particle size distribution, are spherical, and are prevented from cracking.

The firing temperature may be a temperature in which the organic polymer particles, which are the cores of the core-shell particles, and their carbonized products can be removed. The firing temperature is preferably a temperature in which pores and hydroxyl groups remaining in the shell layers of the metal oxide particles can be reduced. The lower limit of the firing temperature is preferably 350°C or higher, more preferably 400°C or higher, even more preferably 600°C or higher, particularly preferably 900°C or higher, and most preferably 1000°C or higher. Further, the upper limit of the firing temperature is preferably 1500°C or lower, more preferably 1400°C or lower, even more preferably 1300°C or lower, particularly preferably 1200°C or lower, and most preferably 1100°C or lower. Since the upper limit of the firing temperature is within the above range, sintering of the metal oxide particles, destruction of the hollow structure, and crystallization can be further prevented.

The firing time is preferably 3 hours or more. The firing time is more preferably 4 hours or more, even more preferably 5 hours or more, and particularly preferably 6 hours or more. The upper limit of the firing time is about 10 hours.

To remove the organic polymer particles, carbonization in step 1 is followed by firing in step 2. This prevents shell destruction and effectively removes the organic polymer particles from the core-shell particles, whereby hollow particles can be produced.

The device used for firing is not limited as long as it can perform firing under the above conditions. The device for use can be, for example, a batch furnace, a continuous furnace, a tubular furnace, or a microwave firing furnace.

Through step 2, the metal oxide particles of the present invention can be produced. The metal oxide particles have a ratio (Sa/Sb) of 1.0 to 2.0, where Sa ($m^2/g$) is the specific surface area of the metal oxide particles measured by the BET method, and Sb ($m^2$/g) is the specific surface area of the metal oxide particles calculated from SEM minor axis d1 ($\mu$m) and true density pa (g/$cm^3$). Through steps 1 and 2, the metal oxide particles have a narrow particle size distribution, are spherical, and are prevented from cracking.

Disaggregation

The metal oxide particles produced in step 2 may be disaggregated to improve the dispersibility of the metal oxide particles. Wet disaggregation of the metal oxide particles may be carried out using an ultrasonic disperser, a colloid mill, a roll mill, a high-pressure jet disperser, or an impact disperser such as a rotary mill, a vibration mill, a planetary mill, an attritor, or a bead mill. Dry disaggregation of the metal oxide particles may be carried out using an ejector-type disaggregation machine, a venturi-type disaggregation machine, an orifice-type disaggregation machine, an obstacle collision-type disaggregation machine, a rotary blade-type disperser, a jet mill, or an impact jet mill. Among these, from the viewpoint of ensuring sufficient disaggregation of the metal oxide particles and further preventing cracking of the metal oxide particles, an ultrasonic disperser or an impact disperser is preferably used for wet disaggregation, and a jet mill or an impact jet mill is preferably used for dry disaggregation. Disaggregation may be performed by a combination of several methods, for example, by performing dry disaggregation, followed by wet dispersion.

Classification

The disaggregated metal oxide particles may be classified to improve dispersibility. When the metal oxide is hollow particles, classification can remove broken and solid particles.
Methods for classification include, but are not limited to, filtration, centrifugation, and air classification. Centrifugation is preferred from the viewpoint of more efficiently removing coarse particles and more efficiently removing solid particles produced in the filing and dispersion steps. Even if the particles are solid, those with a small particle size are slow to settle, and may be thus difficult to separate and remove. Solid particles with a small particle size can be removed by ultrafiltration or the like; however, the filtration process takes a long time, and the yield may decrease, resulting in a decrease in production efficiency. For this reason, it is important to prevent, by classification, the formation of solid particles due to cracking of the metal oxide particles.

Step 3 (Step of Coating with Shells)

The method for producing metal oxide particles (silica particles) of the present invention may further include, after step 2, step 3 of coating surfaces of the silica particles (hollow silica particles) with shells.
The method further includes step 3 of coating the surfaces of the silica particles with shells, whereby the average thickness of the shells of the silica particles can be adjusted.
The method for coating the surfaces of the silica particles with shells is not limited. The method for coating the surfaces of the silica particles with shells is preferably the same as the method for producing the core-shell particles in step ii, except that the organic polymer particles in step ii are replaced by the hollow silica particles obtained in step 2, whereby the surfaces of the hollow silica particles can be further coated with shells.

Step 4 (Surface Treatment of Metal Oxide Particles)

The method for producing metal oxide particles of the present invention may preferably be subjected to, after step 2 or step 3, step 4 of performing surface treatment on the metal oxide particles obtained in step 2. Step 4 can further improve the dispersibility of the metal oxide particles in resins and organic solvents, and can also reduce hydroxyl groups on the surfaces of the metal oxide particles, whereby moisture absorption and deterioration of dielectric properties can be further prevented.
The surface treatment method is not limited. For example, the method includes, after step 2 or step 3 (step of coating with shells): adding a surface treatment agent to a dispersion of the metal oxide particles in a solvent, followed by heating; adding a surface treatment agent or a solution containing a surface treatment agent to powder of the metal oxide particles; or mixing a surface treatment agent with resin and then adding the metal oxide particles. Preferred among these is the method of adding a surface treatment agent to a dispersion of the metal oxide particles in a solvent, followed by heating, from the viewpoint of further preventing aggregation of the metal oxide particles and enabling more uniform surface treatment.

Solvent

Examples of the solvent used in step 4 include water and hydrophilic solvents.

Usable hydrophilic solvents include alcohols, such as methanol, ethanol, n-propanol, isopropanol (IPA), ethylene glycol, propylene glycol, and 1,4-butanediol; ketones, such as acetone and methyl ethyl ketone; and esters, such as ethyl acetate. Preferred among these are alcohols, and methanol, ethanol, and isopropanol can be more preferably used.

The solvents may be used alone or in combination of two or more.

The solvent used is more preferably a solvent mixture of water and a hydrophilic solvent. The mass ratio of the hydrophilic solvent to water in the solvent mixture is not limited. The mass ratio of the hydrophilic solvent to water in the solvent mixture is preferably 90:10 to 10:90, and more preferably 30:70 to 10:90. Since the mass ratio of the hydrophilic solvent to water in the solvent mixture is adjusted within the above range, it is possible to perform surface treatment more uniformly while preventing aggregation of the metal oxide particles.

Surface Treatment Agent

The surface treatment agent may be appropriately selected according to the intended use, and usable examples include trialkoxysilanes, dialkoxysilanes, silazane compounds, and silicone oils. From the viewpoint of being able to coat the surfaces of the metal oxide particles more uniformly and firmly, it is preferable to use trialkoxysilanes and organosilazanes, and it is more preferable to use these in combination.

The trialkoxysilane used as a surface treatment agent is not limited, and examples include 3-acryloxypropyltrimethoxysilane, 3-methacryloxypropyltrimethoxysilane, 3-glycidoxypropyltrimethoxysilane, 2-(3,4-epoxycyclohexyl) ethyltrimethoxysilane, vinyltrimethoxysilane, phenyltrimethoxysilane, N-phenyl-3-aminopropyltrimethoxysilane, and trifluoropropyltrimethoxysilane. The trialkoxysilane for use is more preferably 3-methacryloxypropyltrimethoxysilane, N-phenyl-3-aminopropyltrimethoxysilane, trifluoropropyltrimethoxysilane, or the like.

The trialkoxysilanes may be used alone or in combination of two or more.

The concentration of trialkoxysilane in the solution is preferably 0.01 mass% to 30 mass%, and more preferably 0.05 mass% to 25 mass%.

The amount of trialkoxysilane used is not limited. The amount of trialkoxysilane used is preferably 0.01 mass% to 10 mass%, more preferably 0.05 mass% to 5 mass%, and even more preferably 0.1 mass% to 3 mass%, per 100 mass% of silica. Since the amount of trialkoxysilane used is adjusted within the above range, it is possible to perform surface treatment more uniformly while preventing aggregation of the metal oxide particles.

The temperature for surface treatment with trialkoxysilane is preferably 20°C or higher, more preferably 30°C or higher, and even more preferably 40°C or higher, to allow the reaction to proceed more efficiently. The temperature for surface treatment may be set to any temperature below the boiling point of the solvent, and is preferably 90°C or lower, and more preferably 80°C or lower. Since the temperature for surface treatment with trialkoxysilane is adjusted within the above range, it is possible to perform surface treatment more uniformly while preventing aggregation of the metal oxide particles.

Surface treatment with trialkoxysilane may be performed for a period of time that allows the surface treatment reaction to proceed sufficiently. The time for surface treatment is preferably 10 minutes or more, more preferably 30 minutes or more, and even more preferably 1 hour or more. Further, since long-term surface treatment reduces production efficiency, the time for surface treatment is preferably 48 hours or less, more preferably 24 hours or less, and even more preferably 12 hours or less.

Organosilazane

The organosilazane is not limited, and tetramethyldisilazane, hexamethyldisilazane, pentamethyldisilazane, or the like can be used. Hexamethyldisilazane is preferred from the viewpoint that it is relatively reactive, enabling efficient and uniform surface modification.

The organosilazanes may be used alone or in combination of two or more.

The amount of organosilazane used is not limited. From the viewpoint of being able to perform surface treatment efficiently and sufficiently, the amount of organosilazane used is preferably 10 parts by mass to 100 parts by mass, more preferably 20 parts by mass to 90 parts by mass, and even more preferably 40 parts by mass to 80 parts by mass, per 100 parts by mass of silica.

The temperature for surface treatment with organosilazane is preferably a temperature in which decomposition of organosilazane and condensation with metal oxide proceed efficiently and uniformly. Therefore, the temperature for surface treatment is preferably 30°C or higher, more preferably 40°C or higher, and even more preferably 50°C or higher. In addition, from the viewpoint of suppressing the volatilization of organosilazane and allowing for more thorough surface treatment, the temperature for surface treatment is preferably 90°C or lower, and more preferably 80°C or lower. Since the temperature for surface treatment with organosilazane is adjusted within the above range, the reaction between the metal oxide particles (silica particles) and organosilazane can be carried out more uniformly and efficiently while preventing aggregation of the metal oxide particles.

The time for surface treatment with organosilazane is not limited. The time for surface treatment with organosilazane is preferably 10 minutes to 48 hours, more preferably 30 minutes to 24 hours, and even more preferably 1 hour to 20 hours.

Surface-treated metal oxide particles can be prepared in any form depending on the purpose. That is, a dispersion of metal oxide particles in any solvent can be prepared by removing the solvent through heating, depressurization, or ultrafiltration, while adding another solvent (water, an organic solvent, or the like), or powder of metal oxide particles may be prepared by heat drying, vacuum drying, or spray drying. The solution containing the surface-treated metal oxide particles may be filtered or dried (e.g., vacuum-dried) to remove the solvent, whereby powder containing the surface-treated metal oxide particles may be prepared.

Examples

The present invention will be described in more detail below with reference to Examples and Comparative Examples. However, the present invention is not limited to the Examples.

According to the production conditions in Table 1, polystyrene particles, core-shell particles, and metal oxide particles were produced and subjected to surface treatment. A specific description is given below.

Example 1

Step i: Production of Polystyrene Particles

A reaction apparatus equipped with a four-neck flask, a stirring blade, and a water bath was provided. 737 g of ultrapure water, 2949 g of methanol, and 369 g of styrene monomer (organic monomer) were poured into the four-neck flask, and the flask was heated to an internal temperature of 55°C to 70°C while stirring at 250 rpm under a nitrogen atmosphere.

Then, a 5 wt% aqueous solution of AIBA (2,2'-azobis(isobutylamidine)dihydrochloride) (AIBA: 7 g; ultrapure water: 140 g) dissolved in advance in ultrapure water was added as a polymerization initiator, and polymerization was carried out at 55°C to 75°C for 3 hours.

Subsequently, a 5% polyvinylpyrrolidone (PVP) methanol aqueous solution (PVP: 37 g; methanol: 560 g; water: 140 g) was added as a dispersant, and the mixture was heated at a higher temperature under reflux for 3 hours. Thus, a polystyrene particle reaction solution was produced.

Commercially available PVP includes PVP K-90 available from Ashland and PITZCOL K-60L available from Daiichi Kogyo Co., Ltd. In the Examples, PVP K-90 available from Ashland was used as PVP.

The polystyrene particle reaction solution was poured into another four-neck flask and heated with a mantle heater for methanol substitution, and the reaction was ended when the internal temperature reached 70°C.

A dispersion of polystyrene particles was prepared as described above, and polystyrene particles, which are organic polymer particles, were produced in methanol.

Step ii: Production of Core-Shell Particles

First, a reaction apparatus equipped with a four-neck flask, a stirring blade, and a water bath was provided.

Then, 376 g of tetramethoxysilane (TMOS) (alkoxysilane) was mixed with 744 g of methanol to prepare liquid A.

Separately, 1427 g of a dispersion of the polystyrene particles (polystyrene concentration: 7.6 wt%) produced in step i was added to a flask, and 829 g of water and 823 g of methanol as solvents and 268 g of a 28% aqueous ammonia solution (basic catalyst) were added to the dispersion, whereby liquid B was prepared.

Liquid A was added to liquid B over 190 minutes under stirring at 250 rpm while maintaining the temperature of liquid B at 30°C. With this operation, core-shell particles including cores consisting of polystyrene particles and silica-based shells coating the polystyrene particles were formed in the resulting solution, whereby a dispersion of the core-shell particles was prepared. Then, while heating with a mantle heater, water was added dropwise, and while keeping the liquid volume at least at the same level, the water and ammonia in the reaction solution were replaced with water by heating and atmospheric distillation to prepare a dispersion of core-shell particles, whereby core-shell particles were produced.

Step 1: Carbonization

The dispersion of the core-shell particles obtained in step ii was dried on a hot plate at a temperature of 130°C, whereby powder of the core-shell particles was obtained.

Then, the resulting powder of the core-shell particles was carbonized in a batch-type carbonizer (CYT-200 available from CYC Co., Ltd.) using superheated steam at a temperature of 500°C for 4 hours.

Step 2: Firing

The carbonized core-shell particles were fired (heated) in an electric furnace at 1050°C for 3 hours to remove the polystyrene particles, whereby powder of hollow silica particles was produced.

1 part of the powder of the hollow silica particles was added to 4 parts of pure water and dispersed for 135 minutes using an ultrasonic homogenizer (UP-400S available from Hielscher Inc.), whereby a dispersion was obtained.

The resulting dispersion was centrifuged at 3200 rpm for 10 minutes using a high-speed micro-centrifuge (himac CF-16N available from Hitachi Koki Co., Ltd.) to collect the supernatant, which was then filtered through quantitative filter paper (No. 5A available from ADVANTEC). Thus, a dispersion of hollow silica particles with a solids concentration of 16% was produced.

Step 4: Surface Treatment of Hollow Silica Particles

First, a reaction apparatus equipped with a four-neck flask, a stirring blade, and a water bath was provided. To a flask were added 400 g of the dispersion of the hollow silica particles obtained in step 2, 274 g of ultrapure water, 404 g of isopropanol (IPA), and 1.4 g of N-phenyl-3-aminopropyltrimethoxysilane (KBM-573 available from Shin-Etsu Chemical Co., Ltd.) (trialkoxysilane), followed by mixing, stirring, and heating at 75°C for 1 hour.

Then, 39 g of hexamethyldisilazane (SZ-31 available from Shin-Etsu Chemical Co., Ltd.) (organosilazane) was added dropwise, followed by heating for 2 additional hours.

Then, the reaction solution was cooled to 50°C, and 559 g of ultrapure water and 31 g of 3 M sulfuric acid were sequentially added to cause coagulation. After standing for 1 hour, solids were collected by vacuum filtration.

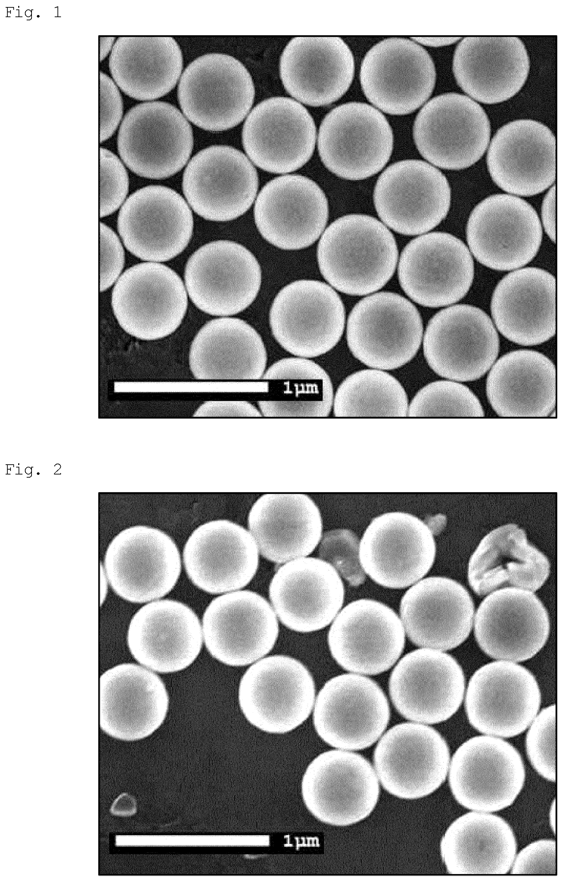

The collected solids were washed with ultrapure water, and vacuum-dried at 120°C, whereby surface-treated hollow silica particles were produced. Fig. 1 shows an SEM image of the metal oxide particles (hollow silica particles) of Example 1.

Example 2

In step 4 of Example 1, only 39 g of hexamethyldisilazane was added dropwise without mixing N-phenyl-3-aminopropyltrimethoxysilane. The same procedure was carried out under the same conditions as in Example 1, except for the process described above.

Example 3

In step 4 of Example 1, 400 g of the dispersion of the hollow silica particles, 274 g of ultrapure water, 404 g of IPA, and 1.1 g of N-phenyl-3-aminopropyltrimethoxysilane were mixed, stirred, and heated at 75°C for 1 hour. The same procedure was carried out under the same conditions as in Example 1, except for the process described above.

Example 4

In step 1 of Example 1, the powder of the core-shell particles was carbonized in a batch-type carbonizer (CYT-200 available from CYC Co., Ltd.) using superheated steam at a temperature of 500°C for 4 hours, and in step 2, the powder was heated in an electric furnace at a temperature of 1075°C for 2 hours. The same procedure was carried out under the same conditions as in Example 1, except for the process described above.

Comparative Example 1

In step 1 of Example 1, the powder of the core-shell particles was not carbonized, and in step 2, the powder was fired (heated) in an electric furnace at a temperature of 1050°C for 3 hours. The same procedure was carried out under the same conditions as in Example 1, except for the process described above. Fig. 2 shows an SEM image of the metal oxide particles (hollow silica particles) of Comparative Example 1.

Comparative Example 2

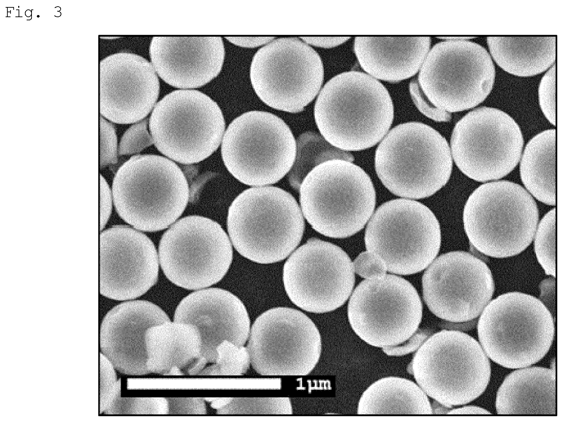

In step 1 of Example 1, for the purpose of preventing bonding between particles, 7.7 g of citric acid (citric acid (anhydrous) available from Fuso Chemical Co., Ltd.) was added to the dispersion of the core-shell particles, and the resulting mixture was dried on a hot plate at a temperature of 130°C. Thus, powder of the core-shell particles was obtained. The resulting powder of the core-shell particles was not carbonized, and the powder was heated in an electric furnace at a temperature of 1050°C for 3 hours. The same procedure was carried out under the same conditions as in Example 1, except for the process described above. Fig. 3 shows an SEM image of the metal oxide particles (hollow silica particles) of Comparative Example 2.

Comparative Example 3

Among the embodiments described in PTL 2, Example 1 was used as Comparative Example 3. The "sphericity" described in PTL 2 was taken as d1/d2. D90/D10 was measured by image analysis of the SEM image shown in Fig. 1 of PTL 2. Based on the description in PTL 2 that the metals in spherical hollow silica particles are Na, K, Mg, and Ca, the values given in PTL 2 were used as equivalent to the alkali metal and alkaline earth metal concentrations M1 given in the present specification.

The properties of the particles obtained in the Examples and Comparative Examples were measured by the following methods.

Carbon Content after Carbonization

The carbon content of the core-shell particles obtained in step 1 was measured by the Pregl method using an organic elemental analyzer (JM1001CN available from J Science Lab Co., Ltd.).

Particle Size (SEM Minor Axis d1)

Using a scanning electron microscope (SEM) (JSM-7900F available from JEOL Ltd.), photographs of the powder of the hollow silica particles obtained in step 4 were taken at an accelerating voltage of 8 kV, the minimum cut length of each of 100 randomly selected particles was measured, and their average value was taken as the particle size (SEM minor axis d1). Image analysis was performed using WinROOF image analysis and measurement software.

D90/D10

A particle size at 10% or more from the smallest SEM minor axis d1 of the 100 measured particles was defined as D10, a particle size at 10% or less from the largest SEM minor axis d1 was defined as D90, and the ratio D90/D10 was calculated.

d1/d2

Image analysis was performed in the same manner as for the SEM minor axis d1, the maximum cutting lengths of the particles were measured, and their average value was taken as d2. The ratio d1/d2 was calculated.

Specific Surface Area Sa

The powder of the hollow particles obtained in step 4 was pre-dried on a hot plate and then heated at 700°C for 1 hour to prepare a measurement sample. The BET specific surface area was measured by the nitrogen adsorption method using the prepared measurement sample.

The nitrogen adsorption method for measuring the BET specific surface area is specifically as follows.

Nitrogen Adsorption Method

Pretreatment device: BELPREP-vac II (available from Microtrac BEL Corp.)
Pretreatment method: Vacuum degassing was performed at 120°C for 16 hours.
Measurement device: BELSORP-mini II (available from Microtrac BEL Corp.)
Measurement method: Nitrogen adsorption isotherms were measured by a constant volume method.
Measurement conditions: adsorption temperature: 77 K; adsorbate: nitrogen; saturated vapor pressure: measured; adsorbate cross-sectional area: 0.162 $nm^2$; equilibrium waiting time (waiting time after reaching the adsorption equilibrium state (the state where the pressure change during adsorption/desorption is below a predetermined value)): 500 sec

The specific surface area was calculated from the measurement results using the BET method.

Specific Surface Area Sb

The specific surface area Sb was calculated from SEM minor axis d1 and true density pa. Specifically, the specific surface area Sb is calculated by the following formula using the minimum cut length d (SEM minor axis d1) ($\mu$m) determined by SEM image analysis, and the true density pa of the metal oxide particles.

$$Sb = 6/(d \times \rho a)$$

True Density (pa)

0.3 g of the powder of the hollow silica particles obtained in step 4 was collected to measure the true density of the hollow particles using a nitrogen gas pycnometer (Ultrapyc 5000 Micro available from Anton Paar Japan Co., Ltd.).

Theoretical True Density (pb)

The theoretical true density (literature value) of the metal oxide constituting the shells of the hollow particles was taken as pb. The pb of amorphous silica was set to 2.2 g/cm$^3$ (MSDS CAS No.: 60676-86-0).

Hollow Rate

The hollow rate was calculated by the following formula using the true density pa of the hollow particles and the theoretical true density pb of the metal oxide constituting the shells of the hollow particles.

$$Hollow\ rate = (1-(\rho a/\rho b)) \times 100$$

Metal Concentration

The following metal concentrations M1 and M2 of the metal oxide particles were measured using ICP atomic emission spectrometry (ICP-AES).

M1: Total concentration of alkali metals and alkaline earth metals M1 in the metal oxide particles
M2: Total concentration of metals M2 other than silicon in the metal oxide particles

Water Absorption Test

The moisture content (mass%) of 0.1 g of the powder of the hollow silica particles obtained in step 4 was measured using a Karl Fischer moisture meter (MKA-610 available from Kyoto Electronics Manufacturing Co., Ltd.) and an evaporator (ADP-611 available from Kyoto Electronics Manufacturing Co., Ltd.). Separately, 1 g of the powder was stored for 7 days in an environment at a temperature of 50°C and a humidity of 75%, after which the moisture content (mass%) of the hollow silica particles was measured in the same manner.

MEK Filterability

8 g of methyl ethyl ketone (MEK) was added to 2 g of the powder of the hollow particles obtained in step 4, and the mixture was stirred at 600 rpm for 2 hours at room temperature using a magnetic stirrer to prepare a sample. The sample was drawn up with a syringe, and the weight of the sample taken was recorded. Then, the sample was filtered through a syringe filter (pore size: 5 $\mu$m, nylon, available from Membrane Solutions LLC), and the amount passed through the filter was weighed. The MEK filterability was calculated based on the following formula:

(MEK filterability (mass%)) = [Amount passed (g)] ÷ [Amount of MEK dispersion of hollow silica particles (g)] × 100

Number of Particles Sized 1 $\mu$m or More (Particle Size Distribution)

The particle size distribution of the powder of the hollow silica particles obtained in step 4 was measured using a laser diffraction/scattering particle size distribution analyzer (LA-950V2 available from Horiba, Ltd.). The refractive index of the hollow particles was set at 1.25 and that of ethanol at 1.36, and the particles were added to the ethanol so that the laser transmittance was 93.0 to 95.0%. Then, the mixture was stirred while being irradiated with ultrasound at an intensity of 3 (output: 10 W) for 1 minute, and the particle size was measured. The proportion of particles with a volume-based particle size of 1 μm or more was defined as the number of particles sized 1 μm or more.

Tables 1, 2, and 3 show the results.

Table 1

| | Carbonization | | Firing conditions | | Surface treatment conditions | |
| | Carbonized/ not Carbonized | Carbon content (parts by mass (per 100 parts by mass of silica)) | Amount of citric acid (parts by mass (per 100 parts by mass of silica)) | Temperature (°C) | Time (h) | Amount of KBM-573 (parts by mass (per 100 parts by mass of silica)) | Amount of SZ-31 (parts by mass (per 100 parts by mass of silica)) |
|---|---|---|---|---|---|---|---|
| Ex. 1 | Carbonized | 3 | 0 | 1050 | 3 | 2.2 | 61 |
| Ex. 2 | Carbonized | 3 | 0 | 1050 | 3 | 0 | 61 |
| Ex. 3 | Carbonized | 3 | 0 | 1050 | 3 | 1.7 | 61 |
| Ex. 4 | Carbonized | 3 | 0 | 1075 | 2 | 2.2 | 61 |
| Comp. Ex. 1 | Not carbonized | 63 | 0 | 1050 | 3 | 2.2 | 61 |
| Comp. Ex. 2 | Not carbonized | 63 | 3 | 1050 | 3 | 2.2 | 61 |

Table 2

| | SEMminor axis d1 (particle size) (μm) | Specific surface area | | | True density $\rho a$ (g/cm$^3$) | $\rho a/\rho b$ | Hollow rate % | Water absorption test: water content (%) | | MEK filterability (%) | Number of particles sized 1 μm or more (%) |
| | | Sa (m$^2$/g) | Sb (m$^2$/g) | Sa/Sb | | | | Day0 | Day7 | | |
|---|---|---|---|---|---|---|---|---|---|---|---|
| Ex. 1 | 0.50 | 17.0 | 10.5 | 1.6 | 1.14 | 0.52 | 48 | 0.03 | 0.16 | 93 | - |
| Ex. 2 | 0.50 | 17.0 | 10.6 | 1.6 | 1.13 | 0.51 | 49 | 0.09 | 0.15 | 88 | 0.0 |
| Ex. 3 | 0.50 | 17.0 | 11.3 | 1.5 | 1.06 | 0.48 | 52 | 0.03 | 0.15 | 94 | 0.0 |
| Ex. 4 | 0.50 | 16.2 | 10.3 | 1.6 | 1.17 | 0.53 | 47 | 0.06 | 0.11 | 42 | 4.3 |
| Comp. Ex. 1 | 0.50 | 20.5 | 9.8 | 2.1 | 1.23 | 0.56 | 44 | 0.07 | 0.13 | 12 | 6.5 |
| Comp. Ex. 2 | 0.50 | 20.5 | 9.6 | 2.1 | 1.25 | 0.57 | 43 | 0.10 | 0.27 | 23 | 7.1 |

Table 3

| | d1/d2 | D90/D10 | Total content of alkali metals and alkaline earth metals M1 (ppm) | Total content of metals M2 other than Si (ppm) |
|---|---|---|---|---|
| Ex. 1 | 0.94 | 1.03 | 5 | 60 |
| Comp. Ex. 3 (Ex. 1 of PTL 2) | 0.98 | 1.88 | 500 | Not described |

Industrial Applicability

The metal oxide particles of the present invention have a narrow particle size distribution, are spherical, and are prevented from cracking. In addition, the metal oxide particles of the present invention are novel hollow silica particles having low true density and excellent dispersibility. Therefore, the metal oxide particles of the present invention can be effectively used as a highly functional material, and can be used as a filler with excellent dielectric properties and dispersibility as an additive for electrically insulating encapsulants.

**Claims**

1. Metal oxide particles having a ratio (Sa/Sb) of 1.0 to 2.0, where Sa ($m^2$/g) is the specific surface area of the metal oxide particles measured by the BET method, and Sb ($m^2$/g) is the specific surface area of the metal oxide particles calculated from SEM minor axis d1 ($\mu$m) and true density pa (g/$cm^3$).

2. The metal oxide particles according to claim 1, which have a ratio (pa/pb) of 0.20 to 0.55, where pa is the true density of the metal oxide particles, and pb is the true density of metal oxide that forms the metal oxide particles.

3. The metal oxide particles according to claim 1 or 2, which have a ratio D90/D10 of 1.0 or more and 1.3 or less, where D10 is a particle size at 10% or more from the smallest SEM minor axis d1 of the metal oxide particles, and D90 is a particle size at 10% or less from the largest SEM minor axis d1.

4. The metal oxide particles according to claim 1 or 2, wherein the metal oxide that forms the metal oxide particles is amorphous silica.

5. A method for producing metal oxide particles, comprising step 1 of carbonizing metal oxide precursor particles, and step 2 of firing the metal oxide precursor particles to produce metal oxide particles, wherein the metal oxide particles have a ratio (Sa/Sb) of 1.0 to 2.0, where Sa ($m^2$/g) is the specific surface area of the metal oxide particles measured by the BET method, and Sb ($m^2$/g) is the specific surface area of the metal oxide particles calculated from SEM minor axis d1 ($\mu$m) and true density pa (g/$cm^3$).

Fig. 1

Fig. 2

Fig. 3

## INTERNATIONAL SEARCH REPORT

| International application No. |
| --- |
| **PCT/JP2024/030461** |

### A. CLASSIFICATION OF SUBJECT MATTER

*C01B 33/18*(2006.01)i
FI: C01B33/18 Z

According to International Patent Classification (IPC) or to both national classification and IPC

### B. FIELDS SEARCHED

Minimum documentation searched (classification system followed by classification symbols)

C01B33/113; C08K3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2021/172294 A1 (AGC INC.) 02 September 2021 (2021-09-02) claims, examples 9, 11, 16, 23, table 2 | 1-2, 4-5 |
| Y | | 3 |
| X | WO 2021/172293 A1 (AGC INC.) 02 September 2021 (2021-09-02) claims, examples 8, 14, 23, tables 1, 3 | 1-2, 4-5 |
| Y | | 3 |
| X | JP 2011-157263 A (MITSUBISHI MATERIALS CORPORATION) 18 August 2011 (2011-08-18) claims | 1, 4 |
| Y | | 3 |
| X | JP 2022-186848 A (FUSO CHEMICAL CO., LTD.) 15 December 2022 (2022-12-15) paragraph [0017] | 1, 4 |
| Y | | 3 |

☑ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 October 2024** | **05 November 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

| International application No. |
| --- |
| **PCT/JP2024/030461** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | JP 2015-113277 A (ASAHI GLASS COMPANY, LIMITED) 22 June 2015 (2015-06-22) paragraphs [0123]-[0125] | 3 |
| Y | JP 2022-172439 A (MOMENTIVE PERFORMANCE MATERIALS JAPAN LLC) 16 November 2022 (2022-11-16) claims | 3 |

Form PCT/ISA/210 (second sheet) (July 2022)

## INTERNATIONAL SEARCH REPORT
### Information on patent family members

International application No.

**PCT/JP2024/030461**

| Patent document cited in search report | | | Publication date (day/month/year) | Patent family member(s) | | | Publication date (day/month/year) |
|---|---|---|---|---|---|---|---|
| WO | 2021/172294 | A1 | 02 September 2021 | US claims, examples 9, 11, 16, 23, table 2 | 2022/0411275 | A1 | |
| | | | | EP | 4112549 | A1 | |
| | | | | CN | 115190867 | A | |
| | | | | KR | 10-2022-0144809 | A | |
| | | | | CN | 118062853 | A | |
| WO | 2021/172293 | A1 | 02 September 2021 | US claims, examples 8, 14, 23, tables 1, 3 | 2022/0396490 | A1 | |
| | | | | EP | 4112551 | A1 | |
| | | | | CN | 115210179 | A | |
| | | | | KR | 10-2022-0144808 | A | |
| | | | | CN | 118145659 | A | |
| JP | 2011-157263 | A | 18 August 2011 | US claims | 2012/0321895 | A1 | |
| | | | | US claims | 2015/0321939 | A1 | |
| | | | | JP | 2011-157260 | A | |
| | | | | WO | 2011/083699 | A1 | |
| | | | | EP | 2522629 | A1 | |
| | | | | CN | 102652109 | A | |
| | | | | TW | 201132589 | A | |
| | | | | KR | 10-2012-0125232 | A | |
| JP | 2022-186848 | A | 15 December 2022 | US paragraph [0025] | 2022/0144650 | A1 | |
| | | | | JP | 2024-36564 | A | |
| | | | | WO | 2020/179558 | A1 | |
| | | | | CN | 113557215 | A | |
| | | | | KR | 10-2021-0133285 | A | |
| | | | | TW | 202039368 | A | |
| JP | 2015-113277 | A | 22 June 2015 | (Family: none) | | | |
| JP | 2022-172439 | A | 16 November 2022 | US claims | 2022/0354757 | A1 | |
| | | | | EP | 4086226 | A1 | |
| | | | | CN | 115304068 | A | |
| | | | | KR | 10-2022-0150810 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007125891 A
- WO 2021172294 A
- JP 2012136363 A
- JP 2022172938 A
- JP 2022019357 A